# EUROPÄISCHE PATENTANMELDUNG

(11) **EP 1 392 068 A1**
(43) Veröffentlichungstag der Anmeldung: **25.02.2004**
(21) Anmeldenummer: 03405608.5
(22) Anmeldetag: 20.08.2003
(51) Int. Cl.: H04Q 7/22

(54) **System und Verfahren zur Verbreitung, Erfassung und Personalisierung digitaler und digital geschützter Objekte**

(30) Priorität: 20.08.2002 CH 14252002
(71) Anmelder: Sybus GmbH, 3052 Zollikofen (CH)
(72) Erfinder: Ritter, Rudolf, 3052 Zollikofen (CH)

(57) **Zusammenfassung**

Ein System umfasst mehrere Anzeigeeinrichtungen (1) auf die Dienstanbieter über eine Zentraleinheit (4) digitale und digital geschützte Bild-, Ton- und Text-Objekte, sogenannte Dienstanbieterobjekte (4.3), über Rundfunksysteme (6/7) oder über Kommunikationsnetz (5), verbreiten und laden, die von Benutzern von Kommunikationsengeräten (2 / 3) über kontaktlose Schnittselle (14) und ladbarer Software von der Anzeigeeinrichtung (1) erfasst, mit persönlichen Bild-, Ton- und Text-Objekten personalisiert und nach Regeln der Dienstanbieter (8), verwendet werden, beispielsweise an andere Benutzer von Kommunikationsengeräten (10) und Kommunikationsteilnehmer (9) versendet oder abspeichern. Identifikation der Anzeigeeinrichtung (1), Zugangsrechte für die Anzeigeeinrichtung (1) zu den Dienstanbieterobjekte (4.3) und Benutzungsrechte der personalisierten Dienstanbieterobjekte werden durch die Zentraleinheit (4) im zusammen mit Sicherheitsmodulen (1.3) erreicht.

## Beschreibung

### Technisches Gebiet

Die vorliegende Erfindung betrifft ein System und ein Verfahren zur Verbreitung von digitalen und digital geschützten Objekten, insbesondere Bild-, Ton- und Textobjekten, an Anzeigeeinrichtungen und Erfassung genannter Objekte über genannte Anzeigeeinrichtung zur Personalisierung der bezogenen Objekte, die vom Benutzer nach Regeln des Objektanbieters genutzt werden können. Die Erfindung betrifft ein System und Verfahren nach den Oberbegriffen der entsprechenden, unabhängigen Patentansprüchen. System und Verfahren ermöglichen das Bereitstellen, Beziehen, Personalisieren, Speichern und Weiterleiten von digitalen und digital geschützten Objekten über die öffentlichen Kommunikationsnetze durch eine Vielzahl von Anzeigeeinrichtungen und Endgeräten.

### Stand der Technik

Anzeigevorrichtungen für Werbung, die Objektdaten über ein Rundfunksystem, Radio- oder Fernsehempfänger, als programmbegleitende digitale Daten erhalten sind bekannt und auf dem Markt erhältlich. Die Rundfunksysteme betreffen Radiosysteme wie DAB (Digital Audio Broadcasting), FM-SWIFT, FM-DARC, und DVB (Digital Video Broadcasting) oder Teletext für Fernsehsysteme. Ebenso sind Anzeigeeinrichtungen für Werbung bekannt die über PSTN-Netze verbunden sind.

In der Patentanmeldung WO9413107 wird ein Verfahren beschrieben, das über ein Fernsehkabelnetzen menugesteuerte interaktive Abläufe ermöglicht.

Die Patentanmeldung WO9415417 beschreibt ein Verfahren, das Kauf- und Analyseprozesse über Fernsehsysteme ermöglicht.

In der Patentanmeldung WO9967904 wird ein Verfahren beschrieben, das interaktive Abläufe von vemetzten Systemen von Rundfunk und Kommunikationssystemen über eine Anzeigevorrichtung ermöglicht.

### Darstellung der Erfindung

Es ist Aufgabe vorliegender Erfindung ein System und ein Verfahren zur Verbreitung von digitalen und digital geschützten Objekten, insbesondere Bild-, Tonund Textobjekten, an Anzeigeeinrichtungen und Erfassung genannter Objekte über genannte Anzeigeeinrichtung zur Personalisierung der bezogenen Objekte, die vom Benutzernach Regeln des Objektanbieters genutzt werden können, vorzuschlagen

Gemäss der vorliegenden Erfindung werden die Ziele insbesondere durch die Elemente der Unabhängigen Ansprüche erreicht. Weitere vorteilhafte Ausführungsformen gehen aus den abhängigen Ansprüchen und der Beschreibungen hervor.

Die oben genannten Ziele werden durch die Erfindung insbesondere dadurch erreicht, dass Anzeigeeinrichtungen verwendet werden, die über das öffentliche Kommunikationsnetz mit einer zentrale Kontrollstelle verbunden sind und an die genannten Anzeigeeinrichtungen Dienstanbieter Dienstanbieterobjekte anbieten können. Um einen technisch gesicherten Ablauf zu garantieren, sind die genannten Anzeigeeinrichtungen mit Sicherheitsmodulen bestückt, die in einem vemetzten System von einer Vielzahl genannten Anzeigeeinrichtungen eine für den Dienstanbieter individuelle Benutzung der für ihn bestimmten genannten Anzeigeeinrichtungen gewährt. Dies wird insbesondere dadurch erreicht, weil im genannten Sicherheitsmodul die Identität und die Adresse genannter Anzeigeeinrichtung gespeichert ist. Die Adresse ist beispielsweise nach Internetadressierung lPv4 (RFC791) oder lPv6 (RFC2460), die eine wesentlich detailliertere Adressierung ermöglicht

In einer bevorzugten Variante laden Dienstanbieter über das Kommunikationsnetz, beispielsweise über eine Internetverbindung, mit beispielsweise kryptischen Sicherheitsmitteln, und eine Zentraleinheit ihre Dienstanbieterobjekte auf besagte Anzeigeeinrichtung.

In einer Variante werden die Dienstanbieterobjekte statt über das öffentliche Kommunikationsnetz über Rundfunknetze, beispielsweise DAB (Digital Audio Broadcastinging) oder DVB (Digital Video Broadcastinging) an die genannten Anzeigeeinrichtungen übertragen. Dies hat den Vorteil, dass Dienstanbieter mit einer Grosszahl von Anzeigeeinrichtungen eine effiziente und kostengünstige Anspeisung haben, insbesondere wenn die Dienstanbieterobjekte grosse Datenmengen aufweisen.

Der Vorteil einer solchen Anzeigeeinrichtungen liegt darin, dass Dienstanbieter gezielt Dienstanbieterobjekte an beliebigen Stelle, wie in einem Schaufenster darstellen und Verwalten können, ohne dass sie dazu eine eigene Infrastruktur benötigen.
Die über die Anzeigeeinrichtungen dargestellten Dienstanbieterobjekte sind beispielsweise Bild-, Ton- oder Textobjekte. In verschiedenen Varianten werden gemischte Objektarten von Bild, Ton und Text. angewendet. Nach diesem Verfahren werden in diesem System beispielsweise von Touristikorganisationen Bilder beispielsweise von Landschaften, Orten, Personen und anderer Arten über die Anzeigeeinrichtungen dargestellt, oder beispielsweise von Unterhaltungsorganisationen beispielsweise Ton- oder Textdokumente über die Anzeigeeinrichtungen dargestellt Es gibt eine unbegrenzte Menge von Darstellungsarten, beispielsweise kann jeder Aussteller an Ausstellungen beispielsweise Produkte, Beschreibungen, Tondokumente und weitere, in die genannten Objektarten klassierbaren, Objekte darstellen.

Die Anzeigeeinrichtung kann beispielsweise eine Grösse haben eines standardmässigen Computer Display oder einer grossformatigen Anzeigeeinrichtungen die auch noch aus grosser Distanz sichtbar ist.

In einer bevorzugten Variante umfasst die Anzeigeeinrichtung eine kontaktlose Schnittstelle, beispielsweise RFID, nach IrDA-Standard, oder Bluetooth, oder einer gleichwertigen Technologie, um mit Kommunikationsendgeräten von Mobilnetzen oder Fixnetzen zu kommunizieren. Dazu wird, wenn die kontaktlose Schnittstelle aufgebaut ist, von der Anzeigeeinrichtung auf das Kommunikationsendgerät Software, beispielsweise ein Applet, ein Xlet oder eine andere Art von ausführbarer Software, übertragen, die den interaktiven Ablauf für die Prozesse, beispielsweise für Bild-, Ton oder Textobjekte unterstützt.

Im weiteren umfasst genannte Anzeigeeinrichtung eine Videokamera, die Bildobjekte aufnimmt und in Verbindung mit genannten Endgeräten genannte Dienstanbieterobjekte, in dieser Variante Bildobjekte, zu persönlichen Dienstanbieterobjekten ergänzt.
In einer Variante werden persönliche Bildobjekte über des Kommunikationsendgerät bezogen, beispielsweise über MMS (Multimedia Messaging Service) in einer anderen Variante über eine im Kommunikationsendgerät eingebaute Videokamera.

Die Kombination der auf der Anzeigeeinrichtung dargestellten Dienstanbieterobjekte mit dem persönlichen Bildobjekt, wird beispielsweise: mit MPEG4 basierter Technology, in kombinierter und interaktiver Funktion von Kommunikationsendgerät und Anzeigeeinrichtung ausgeführt. Dabei kann der Benutzer des Kommunikationsendgerätes das Produkt von Dienstanbieterobjekt und persönlichem Bildobjekt auf der Anzeigeeinrichtung, in einer Variante auch auf der Anzeige des Kommunikationsendgerätes, betrachten und durch Einwirken über die aufgebaute kontaktlose Schnittstelle und genannter ausführbarer Software, verändern und bei Bedarf mit beispielsweise Ton- oder Text- oder mit Ton- und Textobjekten ergänzen und zum weiteren Verwenden bereitstellen. Der Fachmann kann aus dem Prozess genannter Kombination von Dienstanbieterobjekten, in diesem Fall Bildobjekte, mit persönlichen Bildobjekten, verstehen, dass für Ton- oder Textobjekte in ähnlicher Art zwischen Anzeigeeinrichtung und Kommunikationsendgerät persönliche Tonobjekte oder Textobjekte herstellbar sind.

Das genannte weitere Verwenden betrifft beispielsweise das Abspeichern auf ein eigenes Speichermedium, oder das Versenden an ein anderes Kommunikationsendgerät oder eine Kombination davon.

In einer Ausführungsvariante kann der Dienstanbieter in seinen Dienstanbieterobjekten definieren, ob die über die Anzeigeeinrichtung dargestellten Dienstanbieterobjekten zur freien Verfügung oder zahlungspflichtig sind und zu welchem Tarif. Wenn genannte Dienstanbieterobjekte zahlungspflichtig sind, wird mit dem interaktiven Prozess von Anzeigeeinrichtung und Kommunikationsendgerät ein Verrechnungsprozess gestartet. Dabei kann dieser Verrechnungsprozess basierend auf einem der bekannten Konzepten ablaufen, wie beispielsweise nach dem Konzept von Mobile Payment Forum, der Firma Wmode oder anderer. Damit werden Verrechnung beispielsweise mit den Verrechnungen der Kommunikationsdienste, beispielsweise über den Mobiloperator, bei dem der Benutzer Kunde ist, kombiniert, oder über eine Bank, beispielsweise über Debit- oder Kreditkonten, verrechnet

In einer Ausführungsvariante kann der Dienstanbieter in seinen Dienstanbieterobjekten definieren, wie das entsprechende Nutzungsrecht des betreffenden Dienstanbieterobjektes ist, oder, wenn das Dienstanbieterobjekt mit einem persönlichen Objekt kombiniert wurde, des persönlichen Dienstanbieterobjektes. Dabei kann ein Nutzungsrecht beispielsweise eine Zeitdauer oder eine Anzahl Nutzungen betreffen, oder ob das Dienstanbieterobjekt oder das persönliche Dienstanbieterobjekt kopierbar oder nicht kopierbar ist. Die Technology zur Behandlung dieser Nutzungsrechte kann eine reine Softwarelösung oder eine Hardwarelösung sein. Technologien für Benutzungsrechte sind bekannt unter dem Begriff DRM "Digital Rights Managements" und auch "User Rights Management" (URM).

### Kurze Beschreibung der Zeichnung

Nachfolgend wird eine Ausführung der vorliegenden Erfindung anhand eines Beispiels beschrieben. Das Beispiel der Ausführung wird durch die folgende einzige beigelegte Figur illustriert:

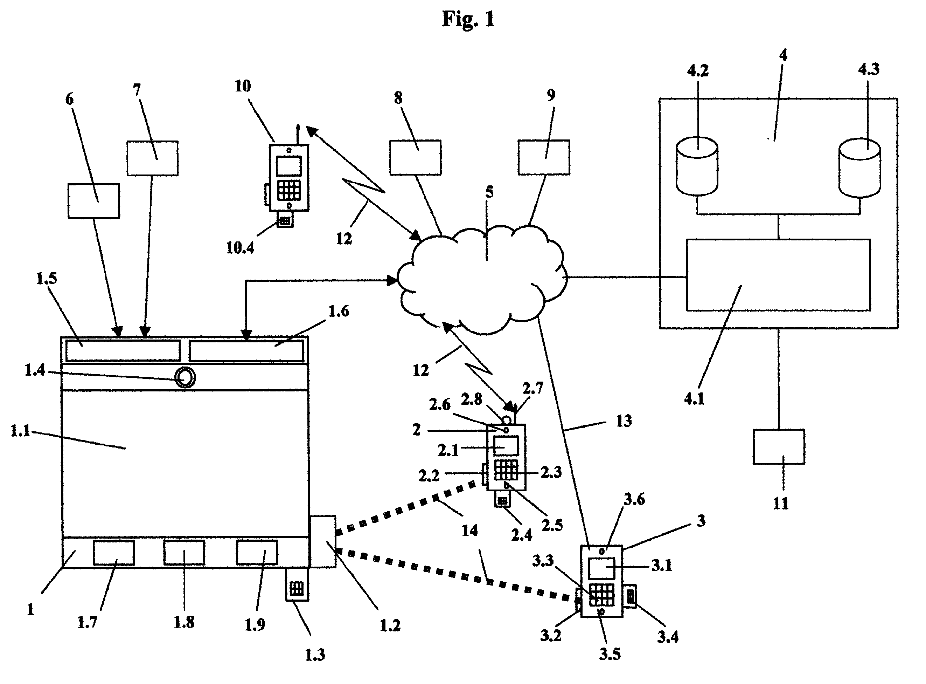

Figur 1 zeigt ein Blockdiagramm, welches schematisch eine Anzeigeeinrichtung (1), mit eingebauter kontaktloser Schnittstelle (14) und Videokamera (1.4) illustriert, an die von einer Zentraleinheit (4) über Kommunikationsnetze (5) oder Rundfunknetze (6 / 7) Dienstanbieterobjekte übertragen und welche genannte Anzeigeeinrichtung (1) über Kommunikationsnetze (5) oder Rundfunknetze (6 / 7) mittels Sicherheitsmodul (1.3), in der Art gesteuert wird, dass genannte Anzeigeeinrichtung (1) mit Kommunikationsendgeräte(2 / 3) über eine kontaktlose Schnittstelle (14) derart miteinander verbunden werden, dass Dienstanbieterobjekte mit persönlichen Objekten zu personalisierten Dienstanbieterobjekte erweitert werden, die basierend auf den vom Dienstanbieter festgelegten Nutzungsregeln vom Benutzer verwendet werden können.

### Wege zur Ausführung der Erfindung

In der Figur 1 bezieht sich das Bezugszeichen 1 auf eine Anzeigeeinrichtung (1), die in einer Variante über Kommunikationsmittel (1.6) und Kommunikationsnetze (5) und in einer anderen Variante über Rundfunknetze (6 / 7) Dienstanbieterobjekte zur Darstellung aufnehmen. Kommunikationsnetze (5) sind beispielsweise Mobilenetze wie GSM / GPRS / UMTS, Wireless Local-Area Network (WLAN) beispielsweise nach dem IEEE Standard 802.11, Public Switched Telephone Network PSTN, digital subscriber line DSL / asymmetrical DSL (ADSL) nach ITU und ANSl, oder eine weitere öffentlich zugängliche und gleichwertige Technologie. Kommunikationsmittel (1.6) betreffen Einrichtungen um über genannte Systeme zu Kommunizieren. Rundfunknetze sind beispielsweise Digital Audio Broadcasting (DAB), Digital Video Broadcasting (DVB), die Systeme wie Terrestrische Rundfunksender (6) oder Satelliten Rundfunksender (7) betreffen. Terrestrische Rundfunksender (6) und Satelliten Rundfunksender (7) bieten Betriebsarten wie beispielsweise Programme Associated Data (PAD), Non Programme Associated Data (NPAD) oder Fast Data Information Channel (FDIC), die eine Übertragung von Daten an Empfangsgeräte (1.5) und in einer Variante eine adressierbare Übertragung von Daten, in unserem Fall Dienstanbieterobjekte, an Empfangsgeräte (1.5) ermöglichen.

Wie in der Figur 1 schematisch dargestellt, Lädt der Dienstanbieter (8) seine digitalen Objekte über das Kommunikationsnetz (5) und die Zentraleinheit (4) an die Anzeigeeinrichtung (1). Die Strecke vom Dienstanbieter (8) zur Zentraleinheit (4) ist beispielsweise eine Intemetverbindung und in der Regel eine gesicherte Internetverbindung, beispielsweise nach den bekannten Sicherheitsmechanismen wie Secure Sockets Layer SSL, OpenSSL, Private Key Infrastructure Security (PKI Security) oder ein gleichwertiges Verfahren. Aus den vom Dienstanbieter (8) in die Zentraleinheit (4) über genanntes Verfahren geladenen digitalen Objekten, werden in der Zentraleinheit die Dienstanbieterobjekte (4.3) und die dazugehörigen Dienstanbieterdaten (4.2) erzeugt. Dienstanbieterobjekte (4.3) sind digitale und digital gesicherte Objekte, für die kontrollierte Nutzung: im System nach Fig. 1, Dienstanbieterdaten (4.2) umfassen die Identifikation der Anzeigeeinrichtung (1) an die die Dienstanbieterobjekte (4.3) übertragen werden sollen, Zugangsrechte zu den Dienstanbieterobjekte (4.3) für die Anzeigeeinrichtung (1), die Darstellung und Bearbeitung: von Dienstanbieterobjekte (4.3) durch die Anzeigeeinrichtung (1) ermöglichen, und Benutzungsrechte die die Verwendung der von der Anzeigeeinrichtung (1) und der dem Kommunikationsendgerät (2 / 3) erstellten personalisierten Dienstanbieterobjekte regelt. Nachdem vom Dienstanbieter die digitalen Objekte in die Zentraleinheit (4) geladen und die digitalen und digital gesicherten Objekte erzeugt sind, werden die genannten digitalen und digital gesicherten Objekte als Dienstanbieterobjekte (4.3) in der Zentraleinheit (4) gespeichert und in die Anzeigeeinrichtungen (1) in den Datenspeicher (1.7) geladen. Als Dienstanbieterdaten (4.2) werden zusätzlich zu den genannten Dienstanbieterdaten (4.2) die Dienstanbieteradresse, Adresse zur Verrechnung von Systemdienstleistung und, je nach Variante, weitere Parameter gespeichert. In der Figur 1 sind Dienstanbieterdaten (4.2) und Dienstanbieterobjekte (4.3) in getrennten Speichermedien dargestellt, genannte Daten und Objekte können je nach Variante im gleichen Medium gespeichert sein. Zudem sind je nach Variante die Dienstanbieterobjekte (4.3) nur temporär oder aber permanent, beispielsweise solange wie der Dienstanbieter (8) seine Dienstanbieterobjekte (4.3) in der Anzeigeeinrichtung (1) darstellt, gespeichert.

Wie Fig. 1 schematisch darstellt, hat die Anzeigeeinrichtung (1) ein Sicherheitsmodul (1.3), das einerseits die genannte Identifikation der Anzeigeeinrichtung (1) zur gesicherten Kommunikation mit der Zentraleinheit (4) speichert und anderseits die Zugangsrechte für die Anzeigeeinrichtung (1) zu den Dienstanbieterobjekte (4.3) speichert. Damit wird eine Bearbeitung der Dienstanbieterobjekte (4.3) im Verarbeitungsmodul (1.9) und Darstellung im Anzeigefeld (1.1) der Anzeigeeinrichtung (1) freigegeben. Genannte Zugangsrechte kann der Dienstanbieter (8) in einer Variante in einem Debit-, in einer andern Variante in einem Kreditprozess beziehen und über die Zentraleinheit (4) auf das Sicherheitsmodul (1.3) der Anzeigeeinrichtung (1) laden.

In einer Variante hat genanntes Sicherheitsmodul (1.3) zusätzlich Benutzungsrechte gespeichert, die nach Regel des Dienstanbieters (8) die Nutzung der personalisierten Dienstanbieterobjekte (4.3) definiert und steuert:
Wie in der Figur 1 schematisch dargestellt, kommunizieren Kommunikationsendgeräte (2 / 3) mit der Anzeigeeinrichtung (1) über eine kontaktlose Schnittstelle (14) und einem Kontaktlosen Kommunikationsmodul (1.2). Wie bereits erwähnt, ist die kontaktlose Schnittstelle (14) beispielsweise nach den Standards von RFID, nach lrDA-Standard, Bluetooth gebildet, die je nach Variante eine gesicherte Kommunikation zwischen den Geräten ermöglichen. Nach erfolgtem Aufbau der kontaktlose Schnittstelle (14), wird von der Anzeigeeinrichtung (1) an das Kommunikationsendgeräte (2 / 3) eine ausführbare Software übertragen, beispielsweise ein Applet, ein Xlet oder gleichwertiger Art. Durch das Laden in die Kommunikationsendgeräten (2 / 3) und dem Aktivieren ausführbarer Software in den Kommunikationsendgeräten (2 / 3), sind die involvierten Geräte, Anzeigeeinrichtung (1) und Kommunikationsendgeräte (2 / 3), bereit für die Personalisierung von Dienstanbieterobjekten (4.3).
Wie in der Figur 1 schematisch dargestellt, umfasst die Anzeigeeinrichtung (1) eine Videokamera (1.5) über die persönliche Objekte vom Benutzer des Kommunikationsendgerätes (2 / 3) und durch genannten Benutzer aufgenommen werden, beispielsweise das persönliche Photo des Benutzers oder einer Gruppe von Personen, welches persönliche Objekt mit Dienstanbieterobjekten (4.3) zu einem persönlichen Dienstanbieterobjekt ergänzt wird. Dieser Prozess kann beispielsweise über die Technologie von MPEG4, oder einer gleichwertigen Technologie, die eine Objektweise Bildbearbeitung ermöglicht, erfolgen. Im weitern können mit genannter ausführbarer Software in den Kommunikationsendgeräten (2 / 3) mit der Anzeigeeinrichtung (1) aus ton- und textbasierte Dienstanbieterobjekten (4.3) persönliche Dienstanbieterobjekten erstellt werden. Kombinationen von bild-, ton-, und textbasierten Dienstanbieterobjekten (4.3) sind vom Benutzer der Kommunikationsendgeräte (2 / 3) ebenso herstellbar. Hergestellte persönliche Dienstanbieterobjekt können beispielsweise über den. Lautsprecher (1.8) der Anzeigeeinrichtung (1) oder am Hörer (2.6 / 3.6) der Kommunikationsendgeräte (2 / 3) wahrgenommen und überprüft werden. Genanntes hergestelltes persönliche Dienstanbieterobjekt kann vom Benutzer der Kommunikationsendgeräte (2 / 3) beispielsweise als elektronische, Ansichtskarte, Grusskarte, Beschreibung, Information, oder als ähnliche Sendung an andere Kommunikationsendgeräte (10) oder Kommunikationsteilnehmer (9), die beispielsweise mittels Personal Computer (PC) kommunizieren, zugestellt werden. Genannte persönliche Dienstanbieterobjekte können zusätzlich mit persönlichen Objekten hergestellt werden, die der Benutzer beispielsweise über die in seinem Kommunikationsendgerät (2) eingebaute Videokamera (2.8) erfasst oder über das Kommunikationsnetz (5) bezieht. Wie der Benutzer das mit dem Dienstanbieterobjekten (4.3) hergestellte persönliche Dienstanbieterobjekt verwenden kann, wird im Benutzungsrecht der Dienstanbieterdaten (4.2) definiert, die, wie bereits erwähnt, objektbezogen im Sicherheitsmodul (1.3) der Anzeigeeinrichtung (1) gespeichert sind und vom Dienstanbieter (8) definiert werden. Genannte Benutzungsrechte basieren auf Technologien wie DRM »Digital Rights Managements" auch bekannt unter URM "User Rights Managements". Wie bereits erwähnt, kann der Dienstanbieter (8) zusätzlich objektbezogen definieren ob seine Dienstanbieterobjekten (4.3) zahlungspflichtig sind und zu welchem Tarif. Diese Information ist für den Benutzer sichtbar, bevor er sein persönliches Dienstanbieterobjekt herstellt.

Verrechnungen der Dienstleistung des Dienstanbieters (8) an den Benutzer des Kommunikationsendgerät (2 / 3) basieren beispielsweise auf Verrechnungstechnologien, die für den sogenannten e-commerce, m-commerce der Mobilkommunikation vorgesehen sind und erfolgen über die Verrechnungsstelle (11).

Das Kommunikationsendgerät (3), das ein Kommunikationsendgerät für das Fixnetz, beispielsweise PSTN, ist, hat in einer Variante ein Identifikationsmodul (3.4) das in den Fachkreisen unter "Second Slot Card" bekannt ist und beispielsweise für e-commerce Anwendungen verwendet wird. Das Identifikationsmodul (3.4) wird im klassische Fixnetz für Funktionen genannten Netzes ansonsten nicht benötigt und dient nur sogenannten Value Added Services (VAS), wie der dieser Erfindung.

Wie in der Figur schematisch dargestellt, umfasst die Anzeigeeinrichtung (1) Anzeigefeld (1.1), Kontaktloses Kommunikationsmodul (1.2), Sicherheitsmodul (1.3), Videokamera (1.4), Rundfunkempfänger (1.5), Kommunikationsmittel (1.6), Datenspeicher (1.7), Lautsprecher (1.8) und Verarbeitungsmodul (1.9). Genannte Baueinheiten sind je nach Variante in geeigneter Form in separaten Gehäusen und mechanisch von der Anzeigeeinrichtung (1) getrennt, funktional aber verbunden, beispielweise über Kabel oder kontaktlose Elemente, wie beispielsweise Bluetooths.

### Gewerbliche Anwendbarkeit

Die vorliegende Erfindung ermöglicht Dienstanbieter, wie Touristikorganisationen, Museen, Aussteller, Unterhaltungsindustrie, und ähnliche Firmen und Organisationen Bild-, Ton- und Textobjekte über spezielle Anzeigeeinrichtungen an geeigneten Standorten anzubieten, die mit Kommunikationsendgeräten, wie beispielsweise das persönliche Mobilgerät, den Bezug beziehungsweise den Kauf genannter Objekte durch Benutzer und persönliche Verwendung, beispielsweise Zustellung an andere Kommunikationsteilnehmer, ermöglicht Die vorliegende Erfindung ermöglicht Benutzer von Kommunikationsendgeräten aus freien und erwerbbaren Bild-, Tonund Textobjekten persönliche Bild-, Ton- und Textobjekten zu erstellen, die in den meisten Fällen nicht oder zumindest nicht in dieser Qualität möglich sind, beispielsweise eine Bilderbuchaufnahme einer Berglandschaft bei Regenwetter oder eine Fahrzeugaufnahme wenn betreffendes Fahrzeug an einer Ausstellung von Leuten umstellt ist.

### Legende der Bezugszeichen

1. Anzeigeeinrichtung
   1.1. Anzeigefeld
   1.2. Kontaktloses Kommunikationsmodul
   1.3. Sicherheitsmodul
   1.4. Videokamera
   1.5. Rundfunkempfänger
   1.6. Kommunikationsmittel
   1.7. Datenspeicher
   1.8. Lautsprecher
   1.9. Verarbeitungsmodul
2. Mobilendgerät
   2.1.Anzeige
   2.2. Kontaktloses Kommunikationsmodul
   2.3. Tastatur
   2.4. Identifikationsmodul
   2.5. Mikrofon
   2.6. Hörer
   2.7. Antenne
   2.8. Videokamera
3. Kommunikationsendgerät
   3.1. Anzeige
   3.2. Kontaktloses Kommunikationsmodul
   3.3. Tastatur
   3.4. Identifikationsmodul
   3.5. Mikrofon
   3.6. Hörer
4. Zentraleinheit
   4.1. Zentraler Server
   4.2. Dienstanbieterdaten
   4.3. Dienstanbieterobjekte
5. Kommunikationsnetz
6. Terrestrischer Rundfunksender
7. Satelliten Rundfunksender
8. Dienstanbieter
9. Kommunikationsteilnehmer
10. Mobilkommunikationsteilnehmer
11. Verrechnungsstelle
12. Luftschnittstelte
13. Kommunikationsschnittselle
14. Kontaktlose Schnittstelle

## Patentansprüche

1. System zur Verbreitung, Erfassung und Personalisierung digitaler und digital geschützter Objekte, welches System ein Kommunikationssystem (5) umfasst, in welchem eine Vielzahl von Benutzern mittels mobilen und fixen Kommunikationsendgeräten (2 3} über Anzeigeeinrichtungen (1), die über eine Zentraleinheit (4) kontrolliert werden, digitale und digital geschützte Objekte erfassen, personalisieren und verwenden, **dadurch gekennzeichnet,**
- **dass** eine genannte Zentraleinheit (4) Dienstanbieterdaten (4.2) führt, die die Kontrolle von Verbreitung von digitalen und digital gesicherten Objekten über das Kommunikationsnetz (5) und der Anzeigeeinrichtung (1), das Erfassen und Personalisieren über die Luftschnittstelle (14) mittels genannten Kommunikationsendgeräten (2/3) umfasst,
- **dass** eine genannte Zentraleinheit (4) Dienstanbieterobjekte (4.3) führt, die über genanntes Kommunikationsnetz (5), Anzeigeeinrichtung (1) und genannter Kommunikationsendgeräte (2 / 3) über die Luftschnitteteile (14) Erfassung der genannten digitaler und digital gesicherten Objekte durch die Kommunikationsendgeräte (2 / 3) und die Personalisierung genannter Objekte umfasst,
- **dass** das System genannte Anzeigeeinrichtungen (1) umfasst, welche über Kommunikationsnetz (5), Terrestrische Rundfunksender (6) und Satelliten Rundfunksender (7) digitale und digital gesicherte Objekte erhalten,
- **dass** das System genannte Anzeigeeinrichtung (1) umfasst, welche Verbreitung, Erfassung und Personalisierung von digitale und digital gesicherte Objekte mit genannten Kommunikationsendgeräten (2 / 3) umfasst.

2. System gemäss Anspruch 1, **dadurch gekennzeichnet, dass** genannte Zentraleinheit (4) die Identifikation genannter Anzeigeeinheit in der Einheit Dienstanbieterdaten (4.2) führt

3. System gemäss einem der Ansprüche 1 bis 2, **dadurch gekennzeichnet, dass** genannte Zentraleinheit (4) die Zugangsrechte zu den digitalen und digital gesicherten Objekte für die Anzeigeeinrichtung (1) in der Einheit Dienstanbieterdaten (4.2) führt.

4. System gemäss einem der Ansprüche 1 bis 3, **dadurch gekennzeichnet, dass** genannte Zentraleinheit (4) Benutzungsrechte der digitalen und digital gesicherten Objekte in der Einheit Dienstanbieterdaten (4.2) führt.

5. System gemäss einem der Ansprüche 1 bis 4, **dadurch gekennzeichnet, dass** Dienstanbieterobjekte (4.3) über öffentliche Kommunikationsletzte (5) vom Dienstanbieter (8) verwaltet werden.

6. System gemäss einem der Ansprüche 1 bis 5, **dadurch gekennzeichnet, dass** genannte Zentraleinheit (4) Dienstanbieterobjekte (4.3) an vom Dienstanbieter (8) adressierte Anzeigeeinheiten (1) zustellt.

7. System gemäss einem der Ansprüche 1 bis 6, **dadurch gekennzeichnet, dass** genannte Dienstanbieterobjekte (4.3) digitale. und digital gesicherte Objekte sind.

8. System gemäss einem der Ansprüche 1 bis 7, **dadurch gekennzeichnet, dass** digitale und digital gesicherte Objekte Bildobjekte sind.

9. System gemäss einem der Ansprüche 1 bis 8, **dadurch gekennzeichnet, dass** digitale und digital gesicherte Objekte Tonobjekte sind.

10. System gemäss einem der Ansprüche 1 bis 9, **dadurch gekennzeichnet, dass** digitale und digital gesicherte Objekte Textobjekte sind.

11. System gemäss einem der Ansprüche 1 bis 10, **dadurch gekennzeichnet, dass** die Zentraleinheit (4) digitale und digital gesicherte Objekte aus Objekten vom Dienstanbieter (8) erstellt.

12. System gemäss einem der Ansprüche 1 bis 11, **dadurch gekennzeichnet, dass** genannte Anzeigeeinrichtung (1) ein Sicherheitsmodul (1.3) umfasst.

13. System gemäss einem der Ansprüche 1 bis 12, **dadurch gekennzeichnet, dass** das genannte Sicherheitsmodul (1.3) die von der Zentraleinheit (4) vergebenen Identifikation speichert.

14. System gemäss einem der Ansprüche 1 bis 13, **dadurch gekennzeichnet, dass** das genannte Sicherheitsmodul (1.3) die von der Zentraleinheit (4) vergebenen Zugangsrechte speichert.

15. System gemäss einem der Ansprüche 1 bis 14, **dadurch gekennzeichnet, dass** das genannte Sicherheitsmodul (1.3) die von der Zentraleinheit (4) vergebenen Benutzungsrechte speichert.

16. System gemäss einem der Ansprüche 1 bis 15, **dadurch gekennzeichnet, dass** die Zentraleinheit (4) genannte Daten im genannten Sicherheitsmodul (1.3) verwaltet.

17. System gemäss einem der Ansprüche 1 bis 16, **dadurch gekennzeichnet, dass** die genanntes Sicherheitsmodul (1.3) Programmdaten ausweist.

18. System gemäss einem der Ansprüche 1 bis 17, **dadurch gekennzeichnet, dass** genannte Zentraleinheit (4) Programmdaten im genannten Sicherheitsmodul (1.3) verwaltet.

19. System gemäss einem der Ansprüche 1 bis 18, **dadurch gekennzeichnet, dass** genannte Kommunikationsendgeräte (2 /10) Mobilgeräte sind.

20. System gemäss einem der Ansprüche 1 bis 19, **dadurch gekennzeichnet, dass** genannte Kommunikationsendgeräte (3) Endgeräte von Fixnetzen sind.

21. System gemäss einem der Ansprüche 1 bis 20, **dadurch gekennzeichnet, dass** genannte Kommunikationsendgeräte (213 10) Sicherheitsmodule (2.4 / 3.4 / 10.4) aufweisen.

22. System gemäss einem der Ansprüche 1 bis 21, **dadurch gekennzeichnet, dass** genannte Kommunikationsendgeräte (2 / 3) über eine kontaktlose Schnittstelle (14) mit der Anzeigeeinrichtung (1) kommunizieren.

23. System gemäss einem der Ansprüche 1 bis 22, **dadurch gekennzeichnet, dass** genannte Kommunikationsendgeräte (2 / 3) über eine kontaktlose Schnittstelle (14) mit der Anzeigeeinrichtung (1) in digital gesicherter Art kommunizieren.

24. System gemäss einem der Ansprüche 1 bis 23, **dadurch gekennzeichnet, dass** Benutzer über genannte Kommunikationsendgeräte (3) und genannte kontaktlose Schnittstelle (14) Dienstanbieterobjekte (4.3) auswählen.

25. System gemäss einem der Ansprüche 1 bis 24, **dadurch gekennzeichnet, dass** genannte bezogene Dienstanbieterobjekte (4.3) durch den Benutzer personalisiert werden.

26. System gemäss einem der Ansprüche 1 bis 25, **dadurch gekennzeichnet, dass** in der Anzeigeeinrichtung (1) angebotene Dienstanbieterobjekte (4.3) Bildobjekte sind und genannte Bildobjekte mit dem über die Videokamera (1.4) aufgenommenen persönlichen Bildobjekt personalisiert werden.

27. System gemäss einem der Ansprüche 1 bis 25, **dadurch gekennzeichnet, dass** in der Anzeigeeinrichtung (1) angebotene Dienstanbieterobjekte (4.3) Bildobjekte sind und genannte Bildobjekte mit dem über die Videokamera (2.8) des Kommunikationsendgerät (2) aufgenommenen persönlichen Bildobjekt personalisiert werden.

28. System gemäss einem der Ansprüche 1 bis 27, **dadurch gekennzeichnet, dass** in der Anzeigeeinrichtung (1) angebotene Dienstanbieterobjekte (4.3) Tonobjekte sind und genannte Tonobjekte mit den über das Mikrofon (2.5 / 3.5) aufgenommenen persönlichen Tonobjekt personalisiert werden.

29. System gemäss einem der Ansprüche 1 bis 28, **dadurch gekennzeichnet, dass** in der Anzeigeeinrichtung (1) angebotene Dienstanbieterobjekte (4.3) Textobjekte sind und genannte Textobjekte mit den über die Tastatur (2.3 / 3.3) aufgenommenen persönlichen Textobjekt personalisiert werden.

30. System gemäss einem der Ansprüche 1 bis 29, **dadurch gekennzeichnet, dass** in der Anzeigeeinrichtung (1) angebotene Dienstanbieterobjekte (4.3) mit vom Kommunikationsendgerät (2 / 3) über das Kommunikationsnetz (5) empfangenen Objekte personalisiert werden.

31. System gemäss einem der Ansprüche 1 bis 28, **dadurch gekennzeichnet, dass** in der Anzeigeeinrichtung (1) angebotene Dienstanbieterobjekte (4.3) mit allen genannten persönlichen und genannten empfangene Objekten kombiniert personalisiert werden.

32. System gemäss einem der Ansprüche 1 bis 31, **dadurch gekennzeichnet, dass** personalisierte Dienstanbieterobjekte (4.3) frei verwendet werden können.

33. System gemäss einem der Ansprüche 1 bis 32, **dadurch gekennzeichnet, dass** personalisierte Dienstanbieterobjekte (4.3) nach den Regeln der in der Dienstanbieterdaten (4.2) gespeicherten Benutzungsrechte verwendet werden.

34. System gemäss einem der Ansprüche 1 bis 33, **dadurch gekennzeichnet, dass** Transaktionen von Dienstanbieterobjekte (4.3) von der Anzeigeeinrichtung (1) zum Kommunikationsendgerät (2 / 3) durch das Sicherheitsmodul (1.3) basierend auf den Zugangsrechten kontrolliert werden.

35. System gemäss einem der Ansprüche 1 bis 34, **dadurch gekennzeichnet, dass** die in dem Sicherheitsmodul (1.3) gespeicherten Zugangsrechte zeitlich beschränkt sind.

36. System gemäss einem der Ansprüche 1 bis 35, **dadurch gekennzeichnet, dass** die in dem Sicherheitsmodul (1.3) gespeicherten Zugangsrechte basierend auf eine durch den Dienstanbieter bestimmte Anzahl Transaktionen beschränkt sind.

37. System gemäss einem der Ansprüche 1 bis 36, **dadurch gekennzeichnet, dass** die in dem Sicherheitsmodul (1.3) gespeicherten Zugangsrechte basierend auf eine durch den Dienstanbieter bestimmte Anzahl elektronische Kopien beschränkt sind.

38. System gemäss einem der Ansprüche 1 bis 37, **dadurch gekennzeichnet, dass** die in dem Sicherheitsmodul (1.3) gespeicherten Zugangsrechte für den Dienstanbieter (8) kostenfrei sind.

39. System gemäss einem der Ansprüche 1 bis 38, **dadurch gekennzeichnet, dass** die in dem Sicherheitsmodul (1.3) gespeicherten Zugangsrechte für den Dienstanbieter (8) kostenpflichtig sind.

40. System gemäss einem der Ansprüche 1 bis 39, **dadurch gekennzeichnet, dass** die in dem Sicherheitsmodul (1.3) gespeicherten, für den Dienstanbieter (8) kostenpflichtigen Zugangsrechte eine Kreditlimite (postpaid) darstellt.

41. System gemäss einem der Ansprüche 1 bis 40, **dadurch gekennzeichnet, dass** die in dem Sicherheitsmodul (1.3) gespeicherten, für den Dienstanbieter (8) kostenpflichtigen Zugangsrechte eine Debitlimite (prepaid) darstellt.

42. System gemäss einem der Ansprüche 1 bis 41, **dadurch gekennzeichnet, dass** Teile der Anzeigeeinrichtung (1) vom genannten Anzeigeeinrichtung (1) getrennten und mit der Anzeigeeinrichtung (1) funktional verbunden sind.

43. Verfahren zur Verbreitung, Erfassung und Personalisierung digitaler und digital geschützter Objekte, Dienstanbieterobjekte (4.3), welches Verfahren folgende Schritte umfasst:
- Bereitstellen von digitalen und digital geschützten Objekten, genannter Dienstanbieterobjekte (4.3), von einem Dienstanbieter (8) über die Zentraleinheit (4) an die Anzeigeeinrichtung (1),
- Erzeugen der Identifikation für die genannten Anzeigeeinrichtungen (1), der Zugangsrechte zu den Dienstanbieterobjekte (4.3) in den Anzeigeeinrichtungen und der Benutzungsrechte der zwischen der Anzeigeeinrichtung (1) und Kommunikationsendgerät (2 / 3) erzeugten personalisierte Dienstanbieterobjekte (4.3),
- Verfahren von Vertrieb von Dienstanbieterobjekte (4.3) über die Anzeigeeinrichtung (1)
- Verfahren von Erfassung genannter Dienstanbieterobjekte (4.3) und Personalisieren genannter Dienstanbieterobjekte (4.3) durch Kommunikationsendgeräten (2 / 3) und der Anzeigeeinrichtung (1)
- Verfahren zur Nutzung der personalisierten Dienstanbieterobjekte (4.3) durch den Benutzer über die Kommunikationsendgeräte (2 / 3)
- Verfahren zum Übermitteln der personalisierte Dienstanbieterobjekte (4.3) durch den Benutzer über die Kommunikationsendgeräte (2 / 3)

44. Verfahren gemäss Anspruch 43, **dadurch gekennzeichnet, dass** Dienstanbieter (8) Dienstanbieterobjekte (4.3) über öffentliche Kommunikationsnetze (5) und eine Zentraleinheit (4) an einer oder mehreren Anzeigeeinrichtungen anbieten.

45. Verfahren gemäss Anspruch 43, **dadurch gekennzeichnet, dass** in der Zentraleinheit (4) die Dienstanbieterobjekte (4.3) an die Anzeigeeinheiten (1) adressiert werden.

46. Verfahren gemäss Anspruch 43, **dadurch gekennzeichnet, dass** die Zentraleinheit (4) Dienstanbieterobjekte (4.3) für die Anzeigeeinheiten (1) mit Zugangsrechten ergänzt.

47. Verfahren gemäss Anspruch 43, **dadurch gekennzeichnet, dass** die Zentraleinheit (4) Dienstanbieterobjekte (4.3) für die Anzeigeeinheiten (1) mit Benutzungsrechten ergänzt.

48. Verfahren gemäss einem der Ansprüche 43 bis 46, **dadurch gekennzeichnet, dass** die Anzeigeeinheiten (1) Dienstanbieterobjekte (4.3) anzeigen kann, wenn entsprechende Zugangsrechte im Sicherheitsmodul (1.3) vorhanden sind.

49. Verfahren gemäss einem der Ansprüche 43 bis 48, **dadurch gekennzeichnet, dass** genannte Zugangsrechte in einer Debitfunktion vom Dienstanbieter (8) durch die Zentraleinheit (4) auf das Sicherheitsmodul (1.3) der Anzeigeeinheiten (1) geladen werden.

50. Verfahren gemäss einem der Ansprüche 53 bis 49, **dadurch gekennzeichnet, dass** genannte Zugangsrechte in einer Kreditfunktion vom Dienstanbieter (8) durch die Zentraleinheit (4) auf das Sicherheitsmodul (1.3) der Anzeigeeinheiten (1) geladen werden.

51. Verfahren gemäss einem der Ansprüche 43 bis 50, **dadurch gekennzeichnet, dass** die Anzeigeeinheiten (1) Dienstanbieterobjekte (4.3) anzeigen und in Kombination mit den Kommunikationsendgeräten (2 / 3) über die kontaktlose Schnittstelle (14) und der Videokamera (1.4) mit persönlichen Bildobjekten personalisierte Dienstanbieterobjekte (4.3) erstellt.

52. Verfahren gemäss einem der Ansprüche 43 bis 51, **dadurch gekennzeichnet, dass** die Anzeigeeinheiten (1) Dienstanbieterobjekte (4.3) anzeigen und in Kombination mit den Kommunikationsendgeräten (2) über die kontaktlose Schnittstelle (14) und der Videokamera (1.4) vom Kommunikationsendgeräten (2) mit persönlichen Bildobjekten personalisierte Dienstanbieterobjekte (4.3) erstellt.

53. Verfahren gemäss einem der Ansprüche 43 bis 52, **dadurch gekennzeichnet, dass** die Anzeigeeinheiten (1) tonbasierte Dienstanbieterobjekte (4.3) bereitstellen und in Kombination mit den Kommunikationsendgeräten (2 / 3) über die kontaktlose Schnittstelte (14) mit persönlichen Tonobjekten personalisierte Dienstanbieterobjekte (4.3) erstellt.

54. Verfahren gemäss einem der Ansprüche 43 bis 53, **dadurch gekennzeichnet, dass** die Anzeigeeinheiten (1) textbasierte Dienstanbieterobjekte (4.3) bereitstellen und in Kombination mit den Kommunikationsendgeräten (2 / 3) über die kontaktlose Schnittstelle (14) mit persönlichen Textobjekten personalisierte Dienstanbieterobjekte (4.3) erstellt.

55. Verfahren gemäss einem der Ansprüche 43 bis 54, **dadurch gekennzeichnet, dass** die Anzeigeeinheiten (1) eine Auswahl von genannten Dienstanbieterobjekten (4.3) bereitstellen und in Kombination mit den Kommunikationsendgeräten (2 / 3) über die kontaktlose Schnittstelle (14) mit einer Auswahl von genannten persönlichen Objekten personalisierte Dienstanbieterobjekte (4.3) erstellt.

56. Verfahren gemäss einem der Ansprüche 43 bis 55, **dadurch gekennzeichnet, dass** die Nutzung personalisierter Dienstanbieterobjekte (4.3) durch den Benutzer entsprechend den mit den Dienstanbieterobjekten (4.3) vemetzten Benutzungsrechten definiert ist.

57. Verfahren gemäss einem der Ansprüche 43 bis 56, **dadurch gekennzeichnet, dass** die Benutzungsrechte zur Nutzung der durch den Benutzer erstellter personalisierter Dienstanbieterobjekte (4.3) hardwarebasiert sind und damit die Kommunikationsendgeräte ein Identifikationsmodul (2.4 / 3.4) mit Softwaremittel zur Bearbeitung der Benutzungsrechte benötigen.

58. Verfahren gemäss einem der Ansprüche 43 bis 56, **dadurch gekennzeichnet, dass** die Benutzungsrechte zur Nutzung der durch den Benutzer erstellter personalisierter Dienstanbieterobjekte (4.3) softwarebasierend sind.

59. Verfahren gemäss einem der Ansprüche 43 bis 58, **dadurch gekennzeichnet, dass** die durch den Benutzer erstellten personalisierter Dienstanbieterobjekte (4.3) kostenfrei sind.

60. Verfahren gemäss einem der Ansprüche 43 bis 58, **dadurch gekennzeichnet, dass** die durch den Benutzer erstellten personalisierter Dienstanbieterobjekte (4.3) kostenpflichtig sind.
